(19) **Europäisches Patentamt / European Patent Office / Office européen des brevets**

(11) **EP 1 705 357 B1**

(12) **EUROPEAN PATENT SPECIFICATION**

(45) Date of publication and mention
of the grant of the patent:
**21.01.2009 Bulletin 2009/04**

(51) Int Cl.:
***F02D 41/22*** *(2006.01)*

(21) Application number: **06110565.6**

(22) Date of filing: **01.03.2006**

(54) **Method and a relative device for diagnosing misfire or partial combustion conditions in an internal combustion engine**

Verfahren und zugehörige Vorrichtung zur Diagnose von Fehlzündungen oder Zuständen mit partieller Verbrennung in einer Brennkraftmaschine

Procédé et dispositif correspondant de diagnostic des ratés d'allumage ou conditions de combustion partielle dans un moteur à combustion interne

(84) Designated Contracting States:
**DE FR GB IT**

(30) Priority: **04.03.2005 EP 05425121**

(43) Date of publication of application:
**27.09.2006 Bulletin 2006/39**

(73) Proprietor: **STMicroelectronics S.r.l.**
**20041 Agrate Brianza (Milano) (IT)**

(72) Inventors:
• **Taglialatela-Scafati, Ferdinando**
**80014 Giugliano (IT)**
• **Cesario, Nicola**
**80013 Casalnuovo di Napoli (IT)**

• **Di Lorenzo, Giovanni**
**81100 Caserta (IT)**

(74) Representative: **Pellegri, Alberto et al**
**Società Italiana Brevetti S.p.A.**
**Via Avegno, 6**
**21100 Varese (IT)**

(56) References cited:
**EP-A- 1 375 890**     **US-A- 5 093 792**
**US-A- 5 878 717**     **US-A1- 2003 010 101**

• **PATENT ABSTRACTS OF JAPAN vol. 011, no. 208 (P-593), 7 July 1987 (1987-07-07) & JP 62 030932 A (MAZDA MOTOR CORP), 9 February 1987 (1987-02-09)**

**Description**

FIELD OF THE INVENTION

This invention relates to internal combustion engines and more particularly to a method and a relative device for diagnosing misfire or partial combustion conditions in an internal combustion engine.

BACKGROUND OF THE INVENTION

A misfire condition (missed internal combustion) of internal combustion engines, is generally due to the fact that fuel is not injected into the cylinder malfunctioning of the injector or the air/fuel mixture does not ignites because of malfunctioning of spark plugs, in spark ignition engines. Besides these misfire conditions, an incomplete (partial) combustion or lack of combustion may take place even for other causes, such as:

-    when the air/fuel mixture is excessively lean
-    when the air/fuel mixture is excessively diluted with large amounts of exhaust gases.

These malfunctioning conditions, that foster misfire or partial combustion, generally occur when the engine is at idle and during fast changes of regime. For example, when the engine is decelerating, the injected fuel is diluted by exhaust gas of the previous cycle and the probability of occurrence of a misfire condition increases.

Notably, in spark ignition engines, in order to reduce the maximum firing temperature for reducing the formation of nitride oxides, often the expedient used is to dilute the injection mixture with aspired exhaust gas.

This common technique, called Exhaust Gas Recirculation (or more briefly EGR), depending on the value of certain parameter of the engine (load, engine speed and alkies) actuates a variable opening of an exhaust gas recirculation valve and thus a different dilution of the air/fuel mixture. In particular conditions, an excessive dilution of the injection mixture may favor the occurrence of partial combustion or misfire.

Therefore, with high percentages of recirculated gases (high percentages of EGR), partial combustions and misfires are likely to occur more often.

It is also possible to have misfire or partial combustion of the air/fuel mixture because of a bad functioning of the lambda sensor and/or of the relative feedback control of the air/fuel ratio of the engine. There may be an excessively lean mixture with a consequent greater probability of misfires and partial combustions.

These phenomena limit significantly the performances of the engine both in terms of power and of amounts of emitted pollutants. Indeed, in presence of misfire and/or partial combustion, the run of the engine becomes irregular, with undesired torque variations, loss of efficiency and strong increase of emissions of unburned hydrocarbons in the exhaust gases.

Misfires, in particular, besides depending engine performances and emissions of hydrocarbons, may damage the catalytic converter. Indeed, because of the high temperature in the catalytic converter (around 450°C), following a misfire the unburned mixture may ignite itself in the catalytic converter and damage it.

Identifying and analyzing the causes that may lead to misfires and partial combustions in spark ignition engines is important in engine control systems.

An effective control of partial combustions and an accurate identification and limitation of misfire events would permit to improve performances of internal combustion engines and would reduce emissions of unburned hydrocarbons and prolong the life of the catalytic converter. Diagnosing misfire conditions is even required by certain regulations (EOBD, OBD II, etc.) relating to onboard diagnostic systems.

Generally, misfire conditions are diagnosed, in many engines, by using speed sensors installed close to the crankshaft for sensing the occurrence of misfires by detecting variations of the angular speed of the crankshaft. Generally, a misfire condition is diagnosed by measuring the time duration of pulses of a phonic wheel of the engine: misfire events cause an abrupt deceleration of the rotation of the crankshaft, and as a consequence they abruptly increase the duration between two successive pulses of the phonic wheel.

This method of diagnosing a misfire condition has drawbacks due essentially to possible alterations of the motion unrelated to misfire conditions and limitations due to fabrication tolerances of the phonic wheel.

For example, a rough road on which a vehicle is running may influence the angular speed of its engine, and this is likely to cause spurious identification of misfires.

In order to overcome these problems, complex hardware and software are generally required for filtering data relating to the angular speed of the engine or as an alternative misfire diagnosis is momentarily disabled.

An alternative and more effective method of diagnosing misfires is based on the analysis of the pressure signal in the combustion chamber. In this case, the pressure signal is acquired by using a pressure sensor installed directly in the combustion chamber. Diagnosing misfire conditions with this technique has innumerable advantages in respect to other techniques commonly implemented in the ECU of engines and based substantially on the analysis of the angular speed of the engine.

One of the most important advantages of exploiting a pressure signal compared to analyzing the angular speed of the engine, consists in that eventual disturbances of the motion (torsional oscillations of the drive shaft and of the transmission gear, irregularities of the road, and so on) and eventual errors introduced by the phonic wheel do not affect the diagnosis of a misfire condition.

The indicated mean effective pressure (or more briefly IMEP) is the parameter of the pressure cycle that is more frequently used for identifying misfire phenomena. In a cycle in which a misfire takes place, the IMEP is negative (and also the torque). Unfortunately, calculation of this parameter is onerous because the IMEP is proportional to the integral along the whole pressure-volume cycle of the pressure in respect to the volume.

US 5,878,717, discloses a system and method for controlling an air-fuel ratio of an internal combustion engine using a ratio of cylinder pressures measured within at least one cylinder. The air-fuel ratio control system includes an electronic control module (ECM) which computes a measured cylinder pressure ratio of the cylinder pressure measured at a predetermined crank angle before top dead center and the cylinder pressure measured at a predetermined crank angle after top dead center. The measured cylinder pressure ratio is compared with an optimal cylinder pressure ratio. Based upon the results of this comparison, the ECM then determines an adjusted air-fuel ratio which would modify the measured pressure ratio to equal the optimal pressure ratio.

JP 62030932 discloses a simple decision circuit for detecting the state of a misfire quickly and accurately, by detecting when the cylinder internal pressure at the upper dead point for a certain crank angle is almost equal to that at the position behind it by the same cranck angle therefrom.

SUMMARY OF THE INVENTION

A reliable an convenient alternative method of diagnosing misfire or partial combustion conditions in an internal combustion engine without using a phonic wheel and a relative diagnosis unit that implements the method have been found. According to the present invention, the combustion conditions are discriminated with soft-computing techniques directly exploiting a combustion pressure signal generated by a common pressure sensor installed in the cylinder.

The applicants have found that there exists an exploitably close correlation between the instantaneous values of the internal cylinder pressure and the occurrence of misfire or partial combustion conditions, and thus the cylinder pressure signal may be reliably used for diagnosing misfires or partial combustions in any functioning condition of the engine. Therefore, phonic wheels installed on the drive shaft are no longer required nor it is anymore necessary to disable the diagnosis unit when the vehicle is running on a rough road or during transient conditions.

Also, differently from the known alternative systems based on the IMEP parameter, the diagnosis device of this invention is faster than the known devices because it is not necessary to calculate the IMEP parameter for identifying a misfire condition.

The diagnosis device of this invention may be used for realizing a controller for an internal combustion engine.

The method of this invention may even be carried out by a software code executed by a computer or by an ECU (Engine Control Unit).

The invention is defined in the annexed claims.

BRIEF DESCRIPTION OF THE DRAWINGS

The invention will be described referring to the attached drawings, wherein:

**Figure 1** shows a feedforward-and-feedback control system of this invention that uses a device of this invention for diagnosing misfire or partial combustion or normal combustion conditions of the engine;
**Figure 2** shows two sample clusters used for diagnosing a misfire or a partial combustion condition;
**Figure 3** shows a sample set of bi-dimensional data clustered in two different ways;
**Figure 4a** shows a sample set of bi-dimensional data to be clustered;
**Figure 4b** shows the set of Figure 4a clustered into four clusters;
**Figure 5** depicts the graphs of the membership functions of the four clusters of Figure 4b;
**Figure 6** shows four different ways of clustering the set of Figure 4a;
**Figure 7** is a graph of the performance index for the clusterings of Figure 6;
**Figure 8** depicts a pressure cycle during a partial combustion condition;
**Figure 9** depicts a pressure cycle during a misfire condition.

## DESCRIPTION OF A PREFERRED EMBODIMENT OF THE INVENTION

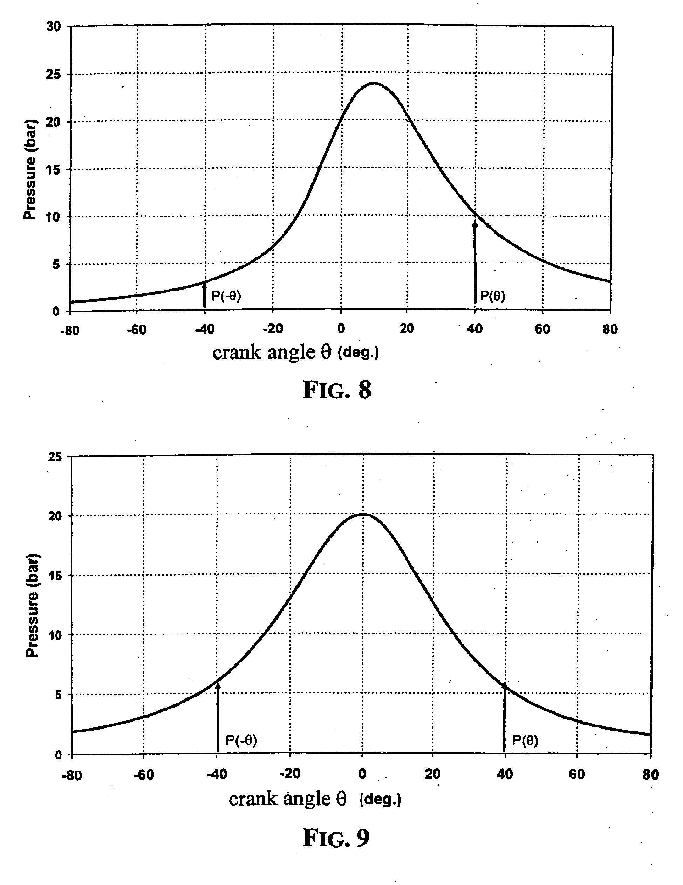

In presence of misfires, it is possible to diagnose the existence of a misfire condition from analyzing the pressure cycle in the combustion chamber, as shown in Figure 9. Indeed, the pressure cycle in this situation is similar to that when the engine is "dragged", that is when the internal combustion engine is moved by an electrical motor. In such a pressure cycle, the ratio between the measured pressures at symmetrical angles in respect to the PMS is always smaller than one.

A way of diagnosing a misfire condition by monitoring the pressure cycle consists in detecting the condition expressed by the following inequality:

$$\frac{P(\theta)}{P(-\theta)} < 1$$

wherein $P$ is the pressure in the combustion chamber and $\theta$ is the crank angle in respect to the position at which the TDC (Top Dead Center) normally occurs. The above inequality is not verified in case of a normal or partial combustion.

In case of a partial combustion, the pressure cycle, a sample of which is depicted in Figure 8, assumes a "deformed" shape and the pressure peak shifts to the right.

According to the method of this invention, the ratio $P(\theta)/P(-\theta)$ is monitored for diagnosing an occurred misfire or a condition of partial combustion. It has been found that when this ratio becomes larger than a pre-established threshold, it may be reliably assumed that a partial combustion is taking place in the cylinder and thus appropriate control actions may be carried out for correcting this undesired condition.

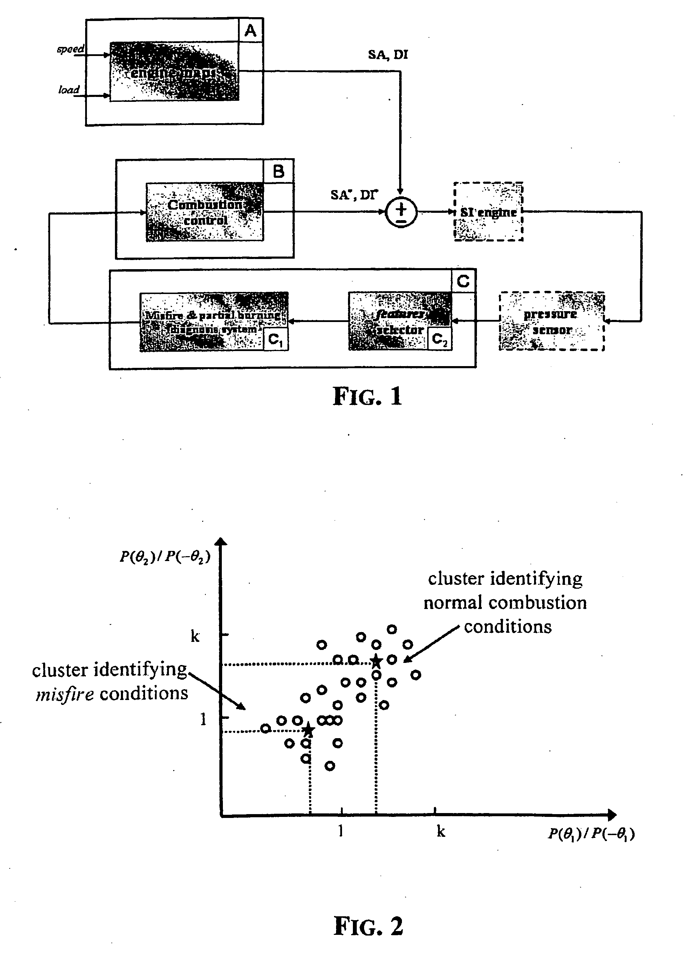

Figure 1 depicts a block diagram of a feedback-and-feedforward control system of this invention of an internal combustion engine.

This control system includes a feedforward controller A, a pressure sensor, a feedback controller B and the diagnosis unit C of this invention that generates a signal representative of a misfire condition or of a partial combustion condition by analyzing pressure signal generated by a pressure sensor installed in a combustion chamber of a cylinder of the engine.

The feedforward controller A is input with signals representative of the speed and of the load of the engine, and outputs a signal DI, that establishes the duration of the fuel injection pulse and a spark generation control signal SA, that determines the spark-advance. The levels of these signals DI and SA are calculated by the feedforward controller A in function of the current speed and load of the engine using a pre-determined model of the engine (engine maps).

The feedback controller B generates feedback signals DI* and SA* for correcting the calculated fuel injection duration and spark advance, represented by the signals DI and SA, respectively, in function of the signal generated by the diagnosis unit C of this invention.

Should a misfire condition be diagnosed for a certain number of consecutive cycles (for example for as long as 10 cycles), the feedback controller may generate a warning to the driver and then may even cut the fuel in order to avoid damages to the catalytic converter.

The diagnosis unit C of this invention is substantially composed of a block C2 that generates signals representative of values of the ratio $P(\theta)/P(-\theta)$ by sampling the pressure signal P in correspondence of different crank angles $\theta$ and of a block C1, that decides whether the engine is in a misfire condition or in a partial combustion condition or is functioning normally.

### Feedforward Controller A

This block generates the signals SA and DI in function of the speed and load of the engine by using control maps of the engine. In practice, according to a common control technique, a mathematical model of the functioning of the engine is determined during a test phase in order to determine, for any pair of values of speed and load of the engine, the best values of the duration of the fuel injection and the spark-advance of the engine.

The optimal duration of the fuel injection is that corresponding to the condition $\lambda = 1$. In practice, the feedforward controller A compares the input values of speed and load with those stored in a look-up table generated during a test phase of the engine, and outputs the signals DI and SA of corresponding values. When the input values of the speed and load do not correspond to any pair of the look-up table, the feedforward controller A calculates the levels of the signals DI and SA by linear interpolation.

It should be stressed that:

- the best fuel injection duration, for a pair of input values of the speed and load not contemplated in the look-up table, could differ from the value obtained by linear interpolation because an engine is a nonlinear system;
- the test phase is carried out under certain pressure and temperature conditions that may differ sensibly from real working conditions of the engine.

Therefore, the calculated duration of fuel injection represented by the signal DI is corrected by a feedback signal DI* that is conditioned by a diagnostic signal, asserting a misfire, a partial combustion or a normal functioning condition of the engine.

**Diagnosis unit C**

In detail, the diagnosis unit C includes a subsystem C2 FEATURE SELECTOR that extract from the combustion pressure cycle at least an operation parameter sufficient for diagnosing the functioning of the engine.

Tests carried out by the applicant showed that the parameter that has proven to be the most indicative for discriminating of the functioning conditions of the engine is the ratio $P(\theta)/P(-\theta)$, wherein P is the combustion pressure and $\theta$ is the crank angle from the Top Dead Center.

Preferably, the subsystem C2 receives as input information the pressure signal generated by the pressure sensor fitted in at least a cylinder of the engine and generates from this signal the values of the pressure ratios $P(\theta_i)/P(-\theta_i)$ measured at predefined crank angles $\theta_i$ that, in a preliminary test phase, have been identified as discriminating among the different functioning conditions of the engine.

The core C1 is, from a mathematical point of view, similar to a classifier that provides, in function of the ratios detected at different crank angles, a qualitative evaluation relative to the current combustion condition. In practice, the block C1 associates to the values of the above ratios a class indicating if the combustion process is normal (class 1) or if partial combustion (class 2) or misfire (class 3) events occurred.

The core C1 of the diagnosis unit analyzes, during a certain number of pressure cycles, the values of the ratio $P(\theta)/P(-\theta)$ in correspondence of predefined crank angles. The n values of the pressure ratios measured in each pressure cycle identify a corresponding point of a $n$-dimensional space. The functioning of the engine is observed for a certain number of consecutive pressure cycles and a corresponding number of points are located.

These points are grouped together with a clustering algorithm executed by the core C1, such as for example the Fuzzy Probabilistic C-Means or any other appropriate clustering algorithm, for example one of those described in the prior European Patent application N° 05425121.0 of the same applicant, thus identifying a number of clusters.

Since at most three different functioning conditions may be identified, the number of clusters to be identified by the clustering algorithm is not greater than three.

The best clustering of these points performed by the C1 block, that is the best number of clusters is determined by evaluating a clustering performance index as described in the cited prior European Patent application N° 05425121.0. A brief introduction to clustering algorithms and to the clustering performance index is provided later.

The core C1 executes the clustering algorithm, identifies the number of clusters that maximize the clustering performance index and decides whether, during the observed pressure cycles, only normal combustion conditions have occurred or not and the type of non normal combustion process that has occurred.

This is carried out through the following operations:

- pre-establishing three disjoint ranges of positive real numbers;
- the points of the $n$-dimensional space are clustered at most in three different clusters, such to maximize the performance index;
- the center of gravity of each cluster is located;
- for each center of gravity, the arithmetic mean of the n components thereof is calculated;
- if the arithmetic mean is contained in the first or second or third pre-established range, the relative cluster corresponds to normal combustion or partial combustion or misfire conditions, respectively.

For sake of example, let us suppose that only two clusters have been identified, as shown in Figure 2, one corresponding to misfire conditions and the other corresponding to normal functioning condition. Since the arithmetic mean of the two components of the center of gravity of the leftmost cluster and of the rightmost cluster found by the C1 block, are comprised in [0, 1] and in [1, k], respectively, then the diagnosis unit signals that during the observed pressure cycles misfire conditions and normal combustion conditions have occurred.

Typically, also for $n$-dimensional spaces, clusters for which the arithmetic mean of the n components of their center of gravity is comprised between 0 and 1, correspond to misfire conditions, clusters for which the arithmetic mean of the n components of their center of gravity is comprised between 1 and a pre-fixed threshold k represent normal functioning conditions, and clusters for which the arithmetic mean of the n components of their center of gravity is larger than $k$ represent partial combustion conditions.

The threshold k may be adjusted during a preliminary test phase of the engine.
The core of diagnosis unit may either be a neural network, a fuzzy system or any other learning machine.

**Clustering of M-Dimensional Data**

There are two kinds of data distribution which can be clustered: data *sequences* and data *ensembles.* Data *sequence* means data come from a temporal sampling, e.g. a signal temporal sampling, or also the temporal sequence of engine pressure cycles. On the other hand, data ensemble means data (in an M-dimensional space) that are not temporally linked.
There are several clustering algorithms [1], for each of them there is a different approach to find the *"optimal data clustering".*
Let a data set of N points in the space $\mathbf{R}^m$, $\mathbf{X} = \mathbf{x}_1,..., \mathbf{x}_N$, clustering of $\mathbf{X}$ involves a "natural" partition of the ensemble in $1 < c < N$ sub-structures. There are three different ways to obtain these c sub -structures in a given data set. Each way defines suitably the *membership* matrix (c x N matrix) of X elements versus c clusters. The membership matrix is built by the *c x* N matrix $U_{ik}$ being k = 1, ..., N and i = 1, ..., c.
$U_{ik}$ elements are suitably linked to the distances of X points from c temporary cluster centers.

$$M_P = \left\{ 0 \leq U_{ik} \leq 1 \quad \forall i,k \quad \forall k \exists i \mid U_{ik} > 0 \right\} \qquad (1)$$

$$M_F = \left\{ \sum_{i=1}^{c} U_{ik} = 1 \quad \forall k \quad \sum_{k=1}^{N} U_{ik} > 0 \quad \forall i \right\} \qquad (2)$$

$$M_C = \left\{ U_{ik} = 0 \quad or \quad 1 \quad \forall i,k \right\} \qquad (3)$$

The equations (1), (2) e (3) describe the three feasible membership matrices. In $M_P = M_{possibilistic}$, $U_{ik}$ element is the possibility (typicality) that $X_k$ point belongs to the *i*-th sub-structure. In $M_F = M_{fuzzy}$, $U_{ik}$ element corresponds to the membership probability of $x_k$ point to the *i*-th sub-structure; these probabilities satisfy for each *k* a normalization condition. Finally, $M_C = M_{crisp}$ is a Boolean matrix in which each element $U_{ik} = 1$ if and only if $\mathbf{X}_k$ belongs to the current sub-structure. The three matrices are related by the following relation:

$$M_{crisp} \subset M_{fuzzy} \subset M_{possibilistic} \qquad (4)$$

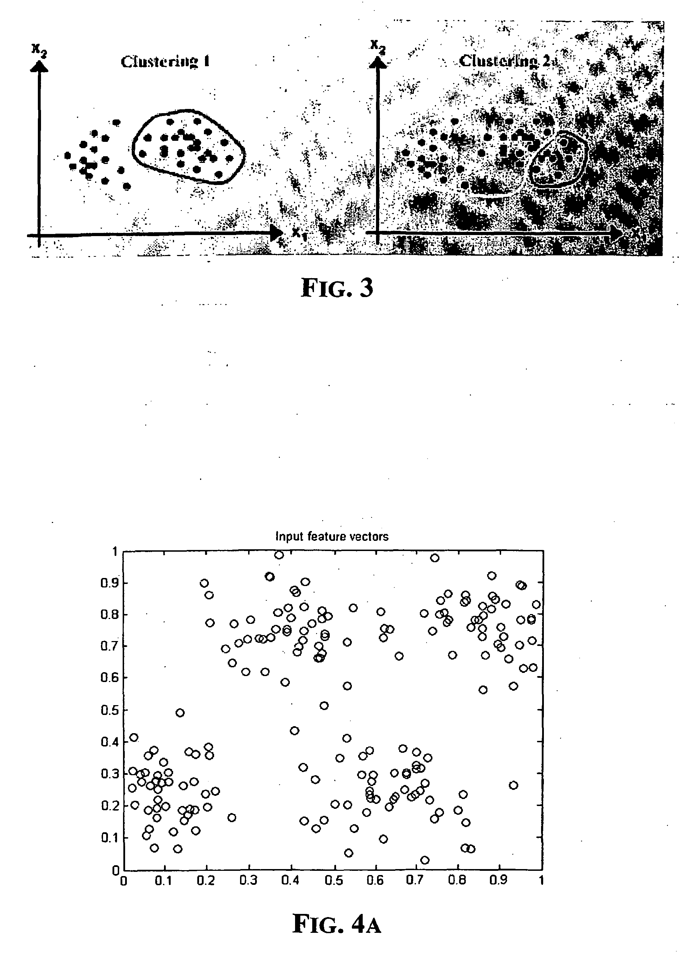

*Finding the "optimal partition "of a data set X means to find the matrix $U_{ik}$ which better represents the unknown sub-structures of X in comparison to the clustering model that the algorithm induces.*
Generally speaking, clustering algorithms are subdivided into two main groups: "hard" and "soft". In "hard" clustering algorithms, each vector belongs only to a single cluster (that is clusters are disjoint), while in "soft" clustering algorithms each vector may belong to more clusters with different fuzzy degrees.
For a data set clustering, some criteria to appraise it need to be introduced.
Moreover, other criteria are needed in order to find which strategies should be followed for improving the clustering. Concerning the first of these requisites, there are not objective criteria to appraise a data set clustering; in fact, the current criteria depend on the application.
For example, Figure 3 shows a sample set of bi-dimensional data clustered in two different ways. For the considered sample set, a good clustering algorithm should identify the two clusters of the example CLUSTERING1.
To improve a data set clustering, the most common approach is based on an iterative solution searching. An exhaustive solution searching, in the space of the possible solutions, could be too onerous from a computational viewpoint. Indeed, the total number of partitions in *c* classes of a data set with N elements is $c^N/c!$. A sub-optimal approach allows for each iteration to improve the solution going to optimize the selected criterion.
Even if the approach does not guarantee the attainment of the absolute optimal solution, it is often used because of its low computational complexity. However, a relevant problem of these approaches is the sensibility to the initial choosing of the clusters.

A satisfactory clustering algorithm for the objectives of this invention is the FCM (Fuzzy C-Means).

Fuzzy C-Means Algorithm (FCM)

The FCM algorithm is based on Fuzzy System Theory which is used as an invaluable mathematical tool in many application fields. A fuzzy set is an element set with a "blurred" membership concept. FCM is an iterative procedure based on the idea that clusters can be handled as fuzzy sets. Each point $\mathbf{x}_k$ (with $k = 1, ..., N$) may belong at the same time to different clusters with membership degrees $U_{kj}$ (with $j = 1, ..., c$) which change during the procedure. There is only a constraint: for each element $\mathbf{x}_k$ and for each algorithm step, the sum of membership degrees must be equal to 1.

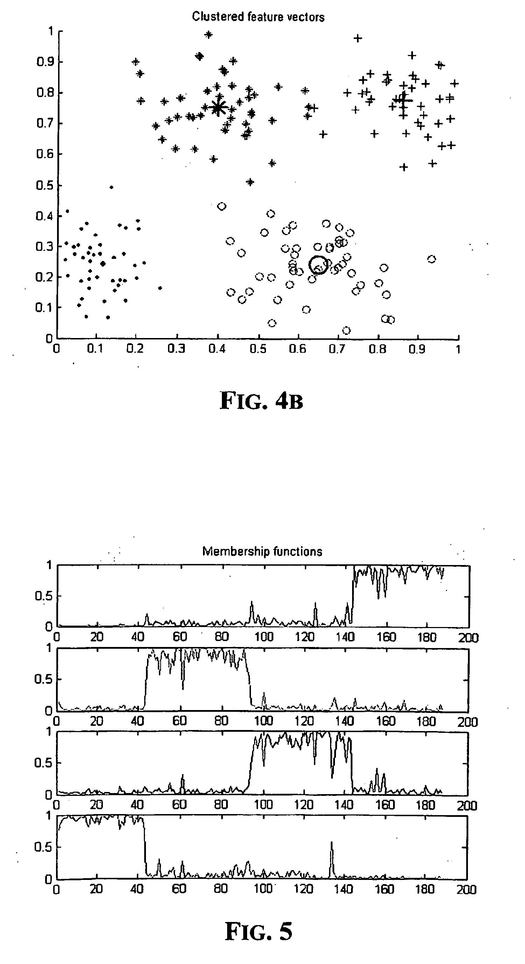

Figures 4a and 4b depict a set of bi-dimensional data before clustering them and after having executed a FCM algorithm, respectively, that grouped them into four clusters.

The relative membership functions of the four clusters are shown in Figure 5.

From a mathematical perspective, the FCM clustering model can be described as an optimization problem with constraints. The objective function to be minimized is:

$$J_m(U,V) = \sum_{i=1}^{c} \sum_{k=1}^{N} U_{ik}^m D_{ik}^2 \qquad (5)$$

The following constraints are associated to the function (5):

$$\sum_{i=1}^{c} U_{ik} = 1 \qquad \forall k = 1,...,N \qquad (6)$$

In Eq. (5) $m$ is the system *fuzzyness* degree while $D_{ik}$ matrix represents the distances between distribution points ($x_k$) and cluster centers ($v_i$). For $m = 0$ the fuzzy clusters become classical clusters, that is, each sample belongs only to a cluster. For $m >> 0$ the system *fuzzyness* level grows. If $m \rightarrow \infty$ we can observe that the membership degrees of data set points approach to $1/c$ and cluster centers approach to the distribution center. The FCM algorithm optimizes a criterion which is the "fuzzy" version of the "trace criterion" [2]. The steps of the FCM algorithm may be summarized as follows:

Step 1: Initialization:

- Establishing the number of clusters c for the N samples,
- Establishing the *fuzzyness* level $m$,
- Establishing a threshold $\varepsilon$,
- Initializing the matrix of centers and of membership functions;

Step 2: Updating the centers of the clusters:

$$v_i = \frac{\sum_{k=1}^{N} U_{ik}^m x_k}{\sum_{k=1}^{N} U_{ik}^m} \qquad \forall i = 1,2,...,c$$

Step 3: Updating the matrix of membership functions:

$$U_{ik} = \frac{1}{\sum\limits_{j=1}^{c} \left( \dfrac{D_{ik}}{D_{jk}} \right)^{\frac{2}{m-1}}} \qquad \forall i = 1, 2, \ldots, c \qquad \forall k = 1, 2, \ldots, N$$

Step 4: Stop condition:

- If $\| v_{new} - voad \| \leq \varepsilon$ or if the maximum number of iterations has been reached;
- Otherwise, return to Step 2.

The above algorithm may be executed for several clustering strategies of data set X, that is, for different number of clusters (from $c_{min}$ to $c_{max}$). The fmal result will be a sequence of $J_{min}(c)$ (with $c = c_{min}, \ldots, c_{max}$), each of them is the function (5) minimum.

There is a *performance index P(c),* given by Eq. (7), by which it is possible to find the "optimal" number of clusters.

$$P(c) = \tilde{J}_{min}(c) - \sum_{i=1}^{c} \sum_{k=1}^{N} U_{ik}^{m} \cdot \| \overline{\mathbf{x}} - \mathbf{v}_i \| \qquad\qquad (7)$$

The "optimal" number of clusters $c_{opt}$ is one minimizes the *performance index* P(c).

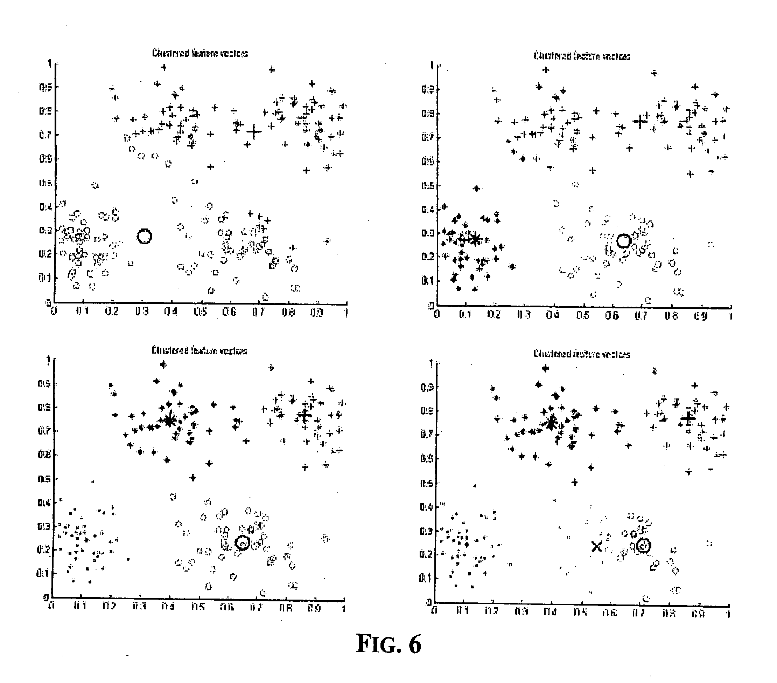

*P(c)* has a minimum when data set clustering has a minimum intra-cluster variance (i.e. small values of $D_{ik}$ in e $\tilde{J}_{min}$,(c)) and a maximum inter-cluster variance (i.e. maximum cluster center distances $v_i$ from data set centers $\overline{x}$). Hence, a graph of the *performance index* versus the number of clusters may be plot. Figure 6 shows the a given bi-dimensional data set of figure 4a grouped with different numbers of clusters ($c = 2, \ldots, 5$).

Looking at Figure 6 it is easy to see that the best data set clustering is obtained with four clusters.

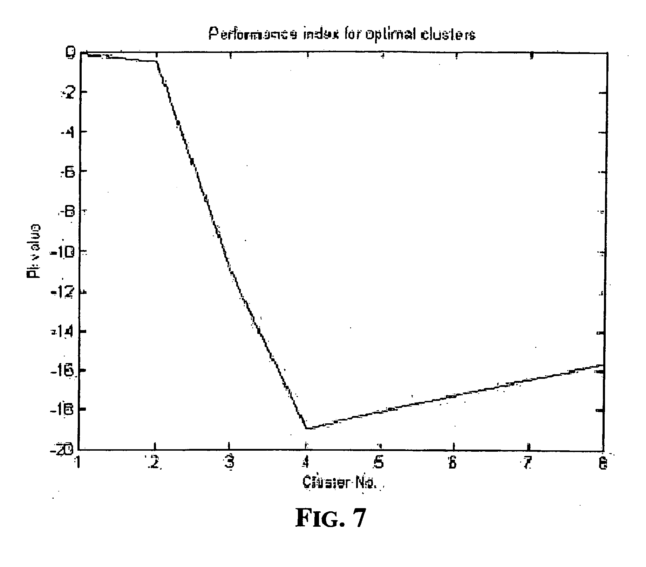

Figure 7 shows that the best clustering performance index of the sample data of Figure 4a is obtained with four clusters.

The advantages of the diagnosis unit of this invention are:

- it is possible to diagnose misfire and partial combustion conditions directly by sensing the pressure in the combustion chamber without employing highly sensible angular speed sensors;
- it is not necessary to disable the diagnosis of misfire conditions when the driver is shifting gear, during transients, when traveling on rough road surfaces and so forth;
- it is relatively easy to identify the cylinder in which the misfire condition has occurred by sensing the combustion pressure in each cylinder and associating a diagnosis unit to each cylinder, thus the control of fuel injection may be more precise;
- discrimination of misfire or partial combustion conditions is relatively simple and implemented in real time.

**REFERENCES**

California's OBDII Requirements (1996). (Title 13, California Code of Regulations (CCR), Section 1968) Resolution 96-34.

N. Cesario, M., Di Meglio, F. Dirozzi (2005). Realization of a Virtual Lambda Sensor on a Fixed Precision System, IEEE Proceedings of the DATE05 International Conference, Munich.

## EP 1 705 357 B1

Cesario, N., Lavorgna, M., Taglialatela (2006), F. Soft Computing Mass Air Flow Estimator for a Single-Cylinder SI Engine, SAE-Paper 2006-01-0010, Detroit.

Förster, J. et al. (1997). Advanced Engine Misfire Detection for SI-Engines, SAE-Paper 970855,Detroit.

Heywood, J. B., (1988). Internal combustion engines fundamentals (McGraw-Hill Book Company).

Ribbens, W. B., Rizzoni, G. (1990). Onboard Diagnosis of Engine Misfires, SAE-Paper 901768, Detroit.

Schmidt, M., Kimmich, F., Straky, H. and Isermann R. (2000). Combustion Supervision by Evaluating Crankshaft Speed and Acceleration, SAE-Paper 2000-01-0558, Detroit.

Sellnau, M.C., Matekunas, F.A., Battiston, P.A., Chang, C.F and. Lancaster, D. (2000). Cylinder-Pressure-Based Engine Control Using Pressure-Ratio-Management and Low-Cost Non-Intrusive Cylinder Pressure Sensors, SAE paper 2000-01-0932, Detroit.

Pal, K., N.R.Pal and J.C. Bezdek (1997). A mixed c-means clustering model. Proceedings of IEEE International Conference on Fuzzy Systems, pp. 11-21.

Frigui H. and Raghu Krishnapuram (1993). A possibilistic approach to clustering. IEEE Transactions on Fuzzy Systems, 1(2) pp. 98-110.

## Claims

1. A method of diagnosing misfire or partial combustion conditions in an internal combustion engine, comprising the steps of:

   sensing the pressure in at least a cylinder of the engine and generating a pressure signal,
   extracting from the generated pressure signal at least the instantaneous value of the ratio

   $$P(\theta)/P(-\theta)$$

   where P is the pressure in the combustion chamber of the cylinder and $\theta$ is the angular position of the engine from the Top Dead Center, for pre-established angular positions,

   **characterized in that** the method comprises the steps of:

   grouping sets of values of said ratio in a certain number of clusters by processing the sets with a clustering algorithm;
   estimating an ideal clustering performance index of said clustering, algorithm for each set;
   calculating a clustering factor as the ratio between said performance index and said ideal performance index;
   choosing the best value of said certain number as the value corresponding to the execution of the clustering algorithm for which the clustering factor is the largest;
   producing a signal representative of a misfire condition or of a partial combustion condition in function of the value of said ratio.

2. The method of claim 1, comprising the steps of:

   pre-establishing three disjoint ranges, first, second and third, of positive real numbers;
   locating the center of gravity of each cluster;
   for each center of gravity, calculating the arithmetic mean of the components thereof;
   asserting that misfire conditions have occurred if at least one of said arithmetic means is contained in the first pre-established range;
   asserting that partial combustion conditions have occurred if at least one of said arithmetic means is contained in the second pre-established range;

9

asserting that normal combustion conditions have occurred if at least one of said arithmetic means is contained in the third pre-established range.

3. A device for diagnosing misfire or partial combustion conditions in an internal combustion engine, comprising:

a pressure sensor generating a signal representative of the pressure in at least a cylinder of the engine;
an off-line trained learning machine input with said pressure signal, extracting instantaneous values of the ratio

$$\dot{P}(\theta)/\dot{P}(-\theta)$$

where P is the pressure in the combustion chamber of the cylinder and θ is the annular position of the engine from the Top Dead Center, for pre-established angular positions,

**characterized in that** said learning machine comprises means for generating a signal representative of a misfire condition or of a partial combustion condition in function of the value of said ratio by implementing the method of claim 1.

4. The device of claim 3, wherein said off-line trained learning machine comprises an identification block (C2) that selects the parameter of said pressure signal, and a core (C1) that generates said signal representative of the engine functioning condition, namely normal combustion, partial burning or misfire, in function only of the value of said parameter.

5. A feedback-and-feedforward control system of an internal combustion engine, comprising
a feedforward controller (A) generating a feedforward signal representing duration of fuel injection (DI) and a spark generation control signal (SA) of the engine in function of speed and load of the engine;
a device of claim 3 or 4 generating said signal representative of a misfire condition or of a partial combustion condition;
a feedback controller (B) generating feedback signals representing duration of fuel injection (DI*) and of spark generation (SA) in function of the signal output by the device of claim 3 or 4, in order to prevent misfire or partial combustion conditions;
an adder of said feedforward and feedback signals of the duration of fuel injection (DI, DI*) and of the spark generation (SA, SA*), generating a fuel injection control signal and a spark generation control signal (SA) of the engine.

6. A computer program comprising a software code loadable into the internal memory of a computer for carrying out the method steps of one of claims 1 or 2 when said code is executed by said computer.

**Patentansprüche**

1. Verfahren zum Diagnostizieren von Fehlzündungen oder Zuständen unvollständiger Verbrennung in einem Verbrennungsmotor, das die Schritte aufweist:

Abtasten des Drucks in mindestens einem Zylinder des Motors und Erzeugen eines Drucksignals,
Gewinnen aus dem erzeugten Drucksignal mindestens des Momentanwerts des Verhältnisses

$$\dot{P}(\theta)/\dot{P}(-\theta),$$

wobei P der Druck in der Verbrennungskammer des Zylinders ist und θ die Winkelposition des Motors vom oberen Totpunkt ist, für vorher festgelegte Winkelpositionen,
**dadurch gekennzeichnet, daß** das Verfahren die Schritte aufweist:

Gruppieren von Wertesätzen des Verhältnisses in einer bestimmten Anzahl von Clustern durch Verarbeiten der Sätze mit einem Clusterbildungsalgorithmus;
Schätzen eines idealen Clusterbildungsleistungsindex des Clusterbildungsalgorithmus für jeden Satz;
Berechnen eines Clusterbildungsfaktors als das Verhältnis zwischen dem Leistungsindex und dem idealen Leistungsindex;
Wählen des besten Werts aus der bestimmten Anzahl als den Wert, der der Ausführung des Clusterbildungsalgorithmus entspricht, für den der Clusterbildungsfaktor der größte ist;
Erzeugen eines Signals, das für einen Fehlzündungszustand oder einen Zustand unvollständiger Verbrennung repräsentativ ist, als Funktion des Wertes des Verhältnisses.

2. Verfahren nach Anspruch 1, das die Schritte aufweist:

Vorfestlegen dreier disjunkter Bereiche, erster, zweiter und dritter, positiver reeller Zahlen;
Lokalisieren des Schwerpunkts jedes Clusters;
für jeden Schwerpunkt, Berechnen des arithmetischen Mittelwerts seiner Komponenten;
Behaupten, daß Fehlzündungszustände aufgetreten sind, wenn mindestens einer der arithmetischen Mittelwerte im ersten vorher festgelegten Bereich enthalten ist;
Behaupten, daß Zustände unvollständiger Verbrennung aufgetreten sind, wenn mindestens einer der arithmetischen Mittelwerte im zweiten vorher festgelegten Bereich enthalten ist;
Behaupten, daß Zustände normaler Verbrennung aufgetreten sind, wenn mindestens einer der arithmetischen Mittelwerte im dritten vorher festgelegten Bereich enthalten ist.

3. Vorrichtung zur Diagnose von Fehlzündungen oder Zuständen unvollständiger Verbrennung in einem Verbrennungsmotor, die aufweist:

einen Drucksensor, der ein Signal erzeugt, das für den Druck in mindestens einem Zylinder des Motors repräsentativ ist;
eine unabhängig trainierte, lernende Maschine, in die das Drucksignal eingegeben wird, die Momentanwerte des Verhältnisses

$$P(\theta)/P(-\theta)$$

gewinnt,
wobei P der Druck in der Verbrennungskammer des Zylinders ist und $\theta$ die Winkelposition des Motors vom oberen Totpunkt ist, für vorher festgelegte Winkelpositionen,
**dadurch gekennzeichnet, daß** die lernende Maschine Mittel zum Erzeugen eines Signals, das für einen Fehlzündungszustand oder einen Zustand unvollständiger Verbrennung repräsentativ ist, als Funktion des Wertes des Verhältnisses durch Ausführen des Verfahrens von Anspruch 1 aufweist.

4. Vorrichtung nach Anspruch 3, wobei die unabhängig trainierte, lernende Maschine einen Identifizierungsblock (C2) aufweist, der den Parameter des Drucksignals auswählt, und einen Kern (C1), der das Signal, das für den Motorfunktionszustand repräsentativ ist, nämlich normale Verbrennung, unvollständige Verbrennung oder Fehlzündung, als Funktion nur des Wertes des Parameters erzeugt.

5. Rückwärts-und-Vorwärtsregelsystem eines Verbrennungsmotors, das aufweist
einen Vorwärtsregler (A), der ein Vorwärtssignal, das die Dauer einer Kraftstoffeinspritzung (DI) repräsentiert, und ein Zündfunkenerzeugungsregelsignal (SA) des Motors als Funktion der Drehzahl und Belastung des Motors erzeugt;
eine Vorrichtung nach Anspruch 3 oder 4, die das Signal erzeugt, das für einen Fehlzündungszustand oder einen Zustand unvollständiger Verbrennung repräsentativ ist;
einen Rückwärtsregler (B), der Rückwärtssignale, die die Dauer einer Kraftstoffeinspritzung (DI*) und einer Zündfunkenerzeugung (SA) repräsentieren, als Funktion des Signals erzeugt, das durch die Vorrichtung nach Anspruch 3 oder 4 ausgegeben wird, um Fehlzündungen oder Zustände unvollständiger Verbrennung zu verhindern;
einen Addierer der Vorwärts- und Rückwärtssignale der Dauer der Kraftstoffeinspritzung (DI, DI*) und der Zündfunkenerzeugung (SA, SA*), der ein Kraftstoffeinspritzungsregelsignal und ein Zündfunkenerzeugungsregelsignal (SA) des Motors erzeugt.

6. Computerprogramm, das einen Softwarecode aufweist, der in den internen Speicher eines Computers ladbar ist, zur Ausführung der Verfahrensschritte eines der Ansprüche 1 oder 2, wenn der Code durch den Computer ausgeführt wird.

**Revendications**

1. Procédé pour diagnostiquer un état de raté d'allumage ou de combustion partielle dans un moteur à explosion, comprenant les étapes suivantes :

   détecter la pression dans au moins un cylindre du moteur et produire un signal de pression ;
   extraire du signal de pression produit au moins la valeur instantanée du rapport

   $$P(\theta)/P(-\theta)$$

   où P est la pression dans la chambre de combustion du cylindre et θ est la position angulaire du moteur par rapport au point mort haut, pour des positions angulaires préétablies ;
   **caractérisé en ce que** le procédé comprend les étapes suivantes :

   regrouper des ensembles de valeurs dudit rapport dans un certain nombre de groupes en traitant les ensembles par un algorithme de regroupement ;
   estimer un indice de performance de regroupement idéal de l'algorithme de regroupement pour chaque ensemble ;
   calculer un facteur de regroupement en tant que rapport entre l'indice de performance et l'indice de performance idéal ;
   choisir la meilleure valeur dudit un certain nombre en tant que valeur correspondant à l'exécution de l'algorithme de regroupement pour laquelle le facteur de regroupement est le plus élevé ;
   produire un signal représentatif d'un état de raté d'allumage ou d'un état de combustion partielle en fonction de la valeur dudit rapport.

2. Procédé selon la revendication 1, comprenant les étapes suivantes :

   préétablir trois plages disjointes, appelées respectivement première, deuxième et troisième plages de nombres réels positifs ;
   localiser le centre de gravité de chaque groupe ;
   pour chaque centre de gravité, calculer la moyenne arithmétique de ses composantes ;
   affirmer qu'un état de raté d'allumage s'est produit si au moins une des moyennes arithmétiques est contenue dans la première plage préétablie ;
   affirmer qu'un état de combustion partielle s'est produit si au moins une des moyennes arithmétiques est contenue dans la deuxième plage préétablie ; et
   affirmer qu'un état de combustion normale s'est produit si au moins une des moyennes arithmétiques est contenue dans la troisième plage préétablie.

3. Dispositif pour diagnostiquer un état de raté d'allumage ou de combustion partielle dans un moteur à explosion, comprenant :

   un capteur de pression produisant un signal représentatif de la pression dans au moins un cylindre du moteur ;
   une machine à apprentissage en temps différé recevant le signal de pression et extrayant des valeurs instantanées du rapport

   $$P(\theta)/P(-\theta)$$

   où P est la pression dans la chambre de combustion du cylindre et θ est la position angulaire du moteur par rapport au point mort haut, pour des positions angulaires préétablies ;
   **caractérisé en ce que** la machine à apprentissage comprend des moyens pour produire un signal représentatif d'un état de raté d'allumage ou d'un état de combustion partielle en fonction de la valeur dudit rapport en mettant en oeuvre le procédé selon la revendication 1.

4. Dispositif selon la revendication 3, dans lequel la machine à apprentissage en temps différé comprend un bloc d'identification (C2) qui sélectionne le paramètre du signal de pression, et un coeur (C1) qui produit le signal représentatif de l'état de fonctionnement du moteur, à savoir une combustion normale, une combustion partielle ou un raté d'allumage, en fonction seulement de la valeur dudit paramètre.

5. Système de commande à rétroaction et à action directe d'un moteur à explosion, comprenant :

   un contrôleur à action directe (A) produisant un signal d'action directe représentant des durées d'injection de carburant (DI) et un signal de commande de production d'étincelle (SA) du moteur en fonction de la vitesse et de la charge du moteur ;
   un dispositif selon la revendication 3 ou 4, produisant le signal représentatif d'un état de raté d'allumage ou d'un état de combustion partielle ;
   un contrôleur à rétroaction (B) produisant des signaux de rétroaction représentant la durée de l'injection de carburant (DI$^*$) et de la génération d'étincelle (SA) en fonction du signal fourni par le dispositif selon la revendication 3 ou 4, afin d'empêcher un état de raté d'allumage ou un état de combustion partielle ;
   un additionneur des signaux d'action directe et de rétroaction représentant la durée de l'injection de carburant (DI, DI$^*$) et de la génération d'étincelle (SA, SA$^*$), produisant un signal de commande d'injection et un signal de commande de génération d'étincelle (SA) du moteur.

6. Programme d'ordinateur comprenant un code logiciel chargeable dans la mémoire interne d'un ordinateur pour mettre en oeuvre les étapes de procédé de l'une des revendications 1 ou 2 lorsque le code est exécuté par l'ordinateur.

**FIG. 1**

**FIG. 2**

**FIG. 3**

Input feature vectors

**FIG. 4A**

FIG. 4B

FIG. 5

FIG. 6

Performance index for optimal clusters

FIG. 7

**FIG. 8**

**FIG. 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5878717 A
- JP 62030932 B
- EP 05425121 A

### Non-patent literature cited in the description

- **N. CESARIO ; M., DI MEGLIO ; F. DIROZZI.** *Realization of a Virtual Lambda Sensor on a Fixed Precision System*
- **CESARIO, N. ; LAVORGNA, M. ; TAGLIALATELA.** *F. Soft Computing Mass Air Flow Estimator for a Single-Cylinder SI Engine,* 2006
- **FÖRSTER, J. et al.** *Advanced Engine Misfire Detection for SI-Engines,* 1997
- **HEYWOOD, J. B.** Internal combustion engines fundamentals. McGraw-Hill Book Company, 1988
- **RIBBENS, W. B. ; RIZZONI, G.** *Onboard Diagnosis of Engine Misfires,* 1990
- **SCHMIDT, M. ; KIMMICH, F. ; STRAKY, H. ; ISERMANN R.** *Combustion Supervision by Evaluating Crankshaft Speed and Acceleration,* 2000
- **SELLNAU, M.C. ; MATEKUNAS, F.A. ; BATTISTON, P.A. ; CHANG, C.F ; LANCASTER, D.** *Cylinder-Pressure-Based Engine Control Using Pressure-Ratio-Management and Low-Cost Non-Intrusive Cylinder Pressure Sensors,* 2000
- **PAL, K. ; N.R.PAL ; J.C. BEZDEK.** *A mixed c-means clustering model,* 1997
- **FRIGUI H. ; RAGHU KRISHNAPURAM.** *A possibilistic approach to clustering,* 1993